(19) Europäisches Patentamt
European Patent Office
Office européen des brevets

(11) EP 2 313 442 B1

(12) # EUROPÄISCHE PATENTSCHRIFT

(45) Veröffentlichungstag und Bekanntmachung des Hinweises auf die Patenterteilung:
**03.09.2014 Patentblatt 2014/36**

(21) Anmeldenummer: **09780695.4**

(22) Anmeldetag: **16.07.2009**

(51) Int Cl.:
*C08F 8/34* (2006.01) *C08F 293/00* (2006.01)
*C09D 5/02* (2006.01) *C09D 153/00* (2006.01)
*C09J 153/00* (2006.01) *C08L 53/00* (2006.01)
*C09B 67/00* (2006.01)

(86) Internationale Anmeldenummer:
**PCT/EP2009/059136**

(87) Internationale Veröffentlichungsnummer:
**WO 2010/018044 (18.02.2010 Gazette 2010/07)**

(54) **DISPERGIERMITTEL UND DESSEN VERWENDUNG**

DISPERSING AGENT AND ITS USE

AGENT DE DISPERSION ET SON UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.08.2008 DE 102008041139**

(43) Veröffentlichungstag der Anmeldung:
**27.04.2011 Patentblatt 2011/17**

(73) Patentinhaber: **Evonik Degussa GmbH**
**45128 Essen (DE)**

(72) Erfinder:
- **KUPPERT, Dirk**
**63799 Aschaffenburg (DE)**
- **VEIT, Thomas**
**58097 Hagen (DE)**
- **FAVRESSE, Philippe**
**40878 Ratingen (DE)**
- **VOM BRUCH, Beatrix Andrea**
**45701 Herten (DE)**
- **MÜLLER, Wolfgang**
**45141 Essen (DE)**
- **LOEBBUS, Mario**
**45478 Mülheim an der Ruhr (DE)**

(56) Entgegenhaltungen:
**DE-A1- 10 235 696** **DE-A1-102006 015 846**
**US-A1- 2002 156 196**

- **SNIJDER A ET AL: "End-group modification of poly(butyl acrylate) prepared by atom transfer radical polymerization: Mechanistic study using gradient polymer elution chromatography" JOURNAL OF POLYMER SCIENCE - PART A - POLYMER CHEMISTRY, WILEY & SONS, HOBOKEN, NJ, US, Bd. 40, 1. Januar 2002 (2002-01-01), Seiten 2350-2359, XP002447521 ISSN: 0887-624X**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 313 442 B1

**Beschreibung**

Die Erfindung betrifft Blockcopolymere, insbesondere solche, die geeignet sind für die Verwendung als Dispergiermittel, insbesondere in Farben und Lacken.

Dispergiermittel erleichtern bei der Herstellung von Farben, Lacken, Druckfarben und sonstigen Beschichtungsstoffen die Einarbeitung von Feststoffen, wie zum Beispiel Füllstoffen und Pigmenten, die als wichtige Formulierungsbestandteile das optische Erscheinungsbild und die physikalisch-chemischen Eigenschaften derartiger Systeme wesentlich bestimmen. Für eine optimale Ausnutzung müssen diese Feststoffe zum einen gleichmäßig in den Formulierungen verteilt werden, zum anderen muß die einmal erreichte Verteilung stabilisiert werden.

Eine Vielzahl verschiedener Substanzen findet heute Verwendung als Dispergiermittel für Feststoffe. Neben sehr einfachen, niedermolekularen Verbindungen, wie z.B. Lecithin, Fettsäuren und deren Salze und Alkylphenolethoxylate, werden auch Polymere als Dispergiermittel eingesetzt.

Jedoch sind mit dem Einsatz solcher Produkte häufig auch eine Vielzahl von Nachteilen verbunden: Beim Einsatz in Pigmentpasten sind oft hohe Gehalte an Dispergieradditiven erforderlich; die erreichbaren Pigmentierungshöhen der Pasten sind unbefriedigend niedrig; die Stabilität der Pasten und damit deren Viskositätskonstanz ist unzureichend; Flockulation und Aggregation lassen sich nicht immer vermeiden. Vielfach mangelt es an der Farbtonkonstanz nach Lagerung der Pasten sowie an der Kompatibilität zu diversen Bindemitteln.

Durch den Einsatz bekannter Dispergieradditive wird in vielen Fällen auch die Wasserfestigkeit oder Lichtbeständigkeit von Beschichtungsstoffen negativ beeinflusst, zudem der bei der Herstellung und Verarbeitung entstehende, unerwünschte Schaum zusätzlich stabilisiert wird.

Es besteht daher ein wachsender Bedarf an Dispergiermitteln für Feststoffe, die gegenüber dem Stand der Technik weiter verbesserte Eigenschaften zeigen. Gefordert sind z. B. Dispergiermittel, die eine möglichst hohe stabilisierende Wirkung auf eine Vielzahl von unterschiedlichen Feststoffen haben und/oder eine verbesserte Farbtiefe der Pigmente im Lack erzielen.

In WO 01/44389 werden Pigmentdispersionen beschrieben, die als Dispergiermittel eine durch kontrollierte radikalische Polymerisation erhältliche Polymerverbindung der Formel $X\text{-}(G)p\text{-}(E)_s\text{-}T$ mit G einem Rest eines radikalisch polymerisierbaren ethylenisch ungesättigten Monomers, E einem hydrophilen Rest eines radikalisch polymerisierbaren ethylenisch ungesättigten Monomers, wobei E und G verschieden sind, X hydrophober Rest entstammend aus dem eingesetzten Initiator und T radikalische Transfergruppe entstammend aus dem eingesetzten Initiator, wobei p und s so groß gewählt sind, dass das mittlere Molekulargewicht mindestens 250 g/mol beträgt.

In US 7,199,177 wird eine Pigmentzusammensetzung beschrieben, die von 0,1 bis 99,9 Gew.-% eines Blockcopolymers der Formel $X\text{-}[G_p\text{-}E_s]_b\text{-}T_c$ aufweist, mit G einem Polymerblock aus sich wiederholenden Einheiten von (Meth)acrylsäure-$C_1$-$C_{24}$-Alkylester, E einem Polymerblock aus sich wiederholenden Einheiten von (Meth)acrylsäure-$C_1$-$C_{24}$-Alkylester, die mit zumindest 50 Gew.-% an Monomeren, die funktionelle Gruppen tragen, copolymerisiert werden, X ein Rest entstammend aus dem eingesetzten Initiator, T eine Polymerkettenendgruppe, und c, p und s jeweils > 0. In WO 00/40630 werden Zusammensetzungen beschrieben, die als Dispergiermittel Verbindungen der Formel $X_a\text{-}[A_x\text{-}B_y]\text{-}T_c$ aufweisen, wobei X ein Initiatorfragment, A und B Polymerblöcke mit unterschiedlicher Polarität, wobei x und y die Anzahl der Monomereinheiten in den jeweiligen Blöcken angeben, und T eine Kettenpolymerabschlussgruppe darstellt. Die in WO 00/40630 beschriebenen Dispergiermittel werden durch radikalische Atom Transfer Polymerisation (ATRP) erhalten.

Die radikalische Atom Transfer Polymerisation (ATRP) stellt ein vielseitiges Verfahren zur Darstellung einer Vielzahl von Polymeren und Copolymeren wie z.B. Polyacrylate, Polymethacrylate, Polystyrolen oder Copolymeren dar. Die ATRP-Methode wurde in den 1990-er Jahren maßgeblich von Prof. Matyjaszewski entwickelt und ist unter anderem beschrieben in J. Am. Chem. Soc., 1995, 117, S.5614 und der WO 97/18247. Ein besonderer Vorteil der ATRP ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch BlockCopolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344, erläutert.

Der ATRP-Prozess beruht auf einem Redoxgleichgewicht zwischen der nur in geringer Konzentration vorliegenden wachsenden, radikalischen Polymerkette und einer Übergangsmetallverbindung in höherer Oxidationsstufe (z.B. Kupfer II) und der schlafenden, bevorzugt vorliegenden Kombination aus der mit einem Halogen bzw. einem Pseudohalogen terminierten Polymerkette und der entsprechenden Übergangsmetallverbindung in geringerer Oxidationsstufe (z.B. Kupfer I). Dies gilt sowohl für die ATRP in der eigentlichen Form, die mit entsprechend (Pseudo-) Halogen substituierten Initiatoren gestartet wird, als auch für die reverse ATRP, bei der das Halogen erst bei Einstellung des Gleichgewichts an die Polymerkette gebunden wird.

Das Halogenatom verbleibt unabhängig von dem gewählten Verfahren nach Abbruch der Reaktion immer an den jeweiligen Kettenenden. Der Verbleib dieses organisch gebundenen Halogens, insbesondere des organisch angebunden Brom ist jedoch nachteilig für die Verwendung nach der ATRP Methode hergestellter Polymere, da solche Verbindungen zu Allergien führen können und darüber hinaus schlecht vom Körper metabolisiert werden und zur Anreicherung im Fettgewebe neigen.

Die bei der ATRP eingesetzten Übergangsmetallverbindungen und ganz besonders die in der überwiegenden Mehrzahl der Polymersynthesen eingesetzten Cu-Verbindungen sind ebenfalls nachteilig, da Kupfer auch in geringen Konzentrationen zu stark gefärbten Produkten führt. Darüber hinaus können Kupferverbindungen reizend und sensibilisierend im Kontakt mit der Haut wirken.

Daher ist eine einfache und effiziente Methode zur Entfernung der endständigen Halogenatome und der Übergangsmetallverbindung von großem Interesse. Insbesondere wünschenswert sind Methoden bei denen beides in einem simultanen Verfahrenschritt erfolgt, um die Reinigung der Polymere so effizient und kostengünstig wie möglich zu gestalten.

Verfahren zur Entfernung von Übergangsmetallverbindungen aus Polymeren bzw. Polymerlösungen sind unter anderem in der DE 10 2006 015 846 beschrieben. Die DE 10 2006 015 846 beschreibt ein Verfahren zur Abtrennung von Übergangsmetallverbindungen aus Polymerlösungen dadurch gekennzeichnet, dass die Übergangsmetallverbindung durch Zusatz eines schwefelhaltiges Fällungsmittel, z. B. eines Mercaptans oder einer Verbindung mit einer Thiogruppe, gefällt wird und mittels Filtration abgetrennt wird. Auf den Inhalt der genannten Schrift wird ausdrücklich Bezug genommen und der Inhalt der genannten Schrifte gilt als Teil der Offenbarung der vorliegenden Anmeldung.

Verfahren zur Entfernung der endständigen Halogenatome sind unter anderen an folgenden Stellen beschrieben:

Die US 2005/090632 offenbart ein Verfahren zur Substitution der Halogene mittels Metallalkoholaten unter Fällung des gebildeten Metallhalogenids. Nachteilig an diesem Vorgehen ist jedoch die nur begrenzte Verfügbarkeit der Metallalkoholate, deren Kosten und, dass das Verfahren nur nach einer Aufreinigung der Polymere durchgeführt werden kann.

In WO 00/34345 und in Heuts et al. (Macromol. Chem. Phys., 1999, 200, S.1380-1385) wird die Durchführung der ATRP unter anfänglicher Zugabe von Schwefelverbindungen (n-Dodecylmercaptan bzw. Octylmercaptan) beschrieben. In beiden Fällen werden zwar thermisch stabilere, wahrscheinlich halogenfreie Polymere beschrieben; in beiden Fällen wird aber auch darauf hingewiesen, dass die Breite der Molekulargewichtsverteilung größer 1,6 und damit der eines freiradikalisch polymerisierten Materials sehr ähnlich ist. Die Vorteile der ATRP eng verteilter Produkte und Kontrolle der Polymerarchitektur sind damit nicht mehr verfügbar. Abgesehen davon ist bei dem beschriebenen Vorgehen eine Fällung der Übergangsmetallverbindungen nicht erwähnt.

In WO 2005/098415 wird die wiederum polymeranaloge, d.h. nach Reinigung des Polymers durchgeführte, Substitution der endständigen Halogenatome an Polystyrolen beschrieben. Hier wird ausschließlich nur an einem Kettenende mit Thioharnstoff und anschließendem Quenschen mit Natriumhydroxid zu Natriumsulfid-Gruppen substituiert. Nachteilig sind neben der Zweistufigkeit auch die nur einseitige Substitution, sowie die Durchführung der Reaktion nach der Aufreinigung des Polymers.

Die WO 2008/017523 offenbart ein Verfahren zur Entfernung von Halogenatomen aus Polymeren und Abtrennung von Übergangsmetallverbindungen, dadurch gekennzeichnet, dass die Halogenatome mittels Zusatz einer geeigneten Schwefelverbindung, z. B. einem Mercaptan oder einer organischen Verbindung mit einer Thiogruppe, substituiert und simultan die Übergangsmetallverbindung durch diese Schwefelverbindung gefällt und anschließend mittels Filtration abgetrennt werden.

DE 10235696 offenbart ein Verfahren zur Herstellung von Homo-, Co- und Blockcopolymeren durch kontrollierte radikalische Polymerisation in wässriger Lösung.

DE 102006015846 betrifft ein Fällungsverfahren zur Entfernung von Übergangsmetallen aus Polymerlösungen, insbesondere um Kupfer-haltige Komplexe, nach einer abgeschlossenen Atom Transfer Radikal Polymerisation.

A. Snijder et al offenbaren im Journal of Polymer Science, Part A, Polymer Chemistry, Wiley & Sons, Hoboken, NJ, US, BD. 40, 2350-2359 mechanistische Studien zur Endgruppen-Modifikation von Poly(butylacrylaten)bei der Atom Transfer Radikal Polymerisation.

Ausgehend vom bekannten Stand der Technik war Aufgabe der vorliegenden Erfindung die Bereitstellung von alternativen Dispergiermitteln, die vorzugsweise eine verbesserte Dispergierung von Pigmenten ermöglicht, sowie die Bereitstellung von verbesserten Verfahren zur Herstellung dieser Dispergieradditive.

Überraschenderweise wurde gefunden, dass diese Aufgabe durch Blockpolymere gemäß Anspruch 1 gelöst wird.

Gegenstand der vorliegenden Erfindung sind deshalb Blockcopolymere gemäß Anspruch 1, ein Verfahren zu deren Herstellung, Zusammensetzungen, die diese Blockcopolymere, insbesondere als Dispergiermittel aufweisen und die Verwendung dieser Zusammensetzungen wie in den Ansprüchen beschrieben.

Die erfindungsgemäßen Blockcopolymere haben den Vorteil, dass sie einen nur geringen (< 5 Massen-ppm)

Anteil an endständig gebundenem Brom besitzen und bei der Verwendung in Lackformulierungen zu verbesserten Farbtiefen führen.

Die erfindungsgemäßen Blockcopolymeren, ein Verfahren zu deren Herstellung sowie deren Verwendung werden nachfolgend beispielhaft beschrieben.

Die erfindungsgemäßen Blockcopolymere der Formel E-[AB]-T, mit E ein Initiatorfragment eines Polymerisationsinitiators, der fähig ist eine radikalische Atomtransferpolymerisation zu initiieren, A und B unterschiedlich aufgebaute Polymerblöcke und T eine Kettenpolymerabschlussgruppe, zeichnen sich dadurch aus, dass der Polymerblock A aufgebaut ist aus Monomeren der Formel A1:

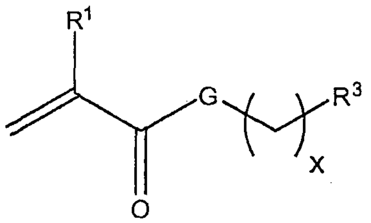

(A1)

und der Polymerblock B gebildet wird durch ein Copolymer aus Monomeren der Formel B1:

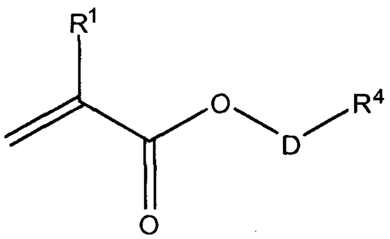

(B1)

mit D einem zweiwertigen Rest der allgemeinen Formel (C1)

$$-(C_2H_4O)_i(C_3H_6O)_j(C_4H_8O)_k(C_{12}H_{24}O)_l(C_8H_8O)_m- \qquad (C1)$$

wobei i, j, k, l und m voneinander unabhängige ganze Zahlen von 0 - 100 sind, mit der Maßgabe, dass die Summe aus $i+j+k+l+m \geq 1$, und falls mehr als einer der Indices i, j, k, l und m > 0 ist, die allgemeine Formel (C1) ein statistisches Oligomer, ein Blockoligomer oder ein Gradientenoligomer darstellt,
und Monomeren der Formel B2:

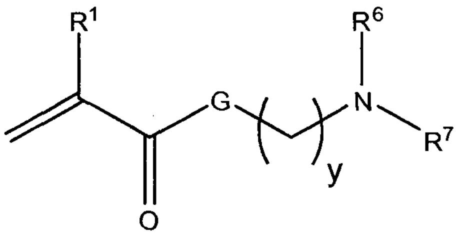

(B2)

mit $R^1$ unabhängig von einander H oder Alkyl, vorzugsweise Methyl,
G = Sauerstoff oder $NR^2$ mit $R^2$ unabhängig voneinander H oder Alkyl mit 1 bis 8 C-Atomen, bevorzugt G = Sauerstoff. Im Fall G = $NR^2$ vorzugsweise mit $R^2$ = H, $R^3$ gleich Aryl- oder Arylalkylrest, vorzugsweise Phenyl- oder Naphthylrest, bevorzugt Phenylrest, $R^4$ gleich Alkyl, vorzugsweise $C_1$- bis $C_3$-Alkyl, bevorzugt Methyl, $R^6$ und $R^7$ unabhängig voneinander Alkylreste, vorzugsweise $C_1$-bis $C_3$-Alkyl, bevorzugt Methyl, x = 0 bis 10 vorzugsweise 1 bis 4, bevorzugt 1, und y gleich 1 bis 10, vorzugsweise 1 bis 4, bevorzugt 2.

In der Formel (C1) ist der Index i vorzugsweise größer 0, bevorzugt von 10 bis 15. Besonders bevorzugt sind die Indizes i und j größer 0.

Die Polymerkettenabschlußgruppe T ist vorzugsweise ein schwefelhaltiger Rest -SQ mit Q gleich einem einwertigen organischen Rest, der vorzugsweise ein Alkylrest, ein Alkoholrest oder ein Säurerest, bevorzugt mit 1 bis 20 Kohlenstoffatomen, ist. Besonders bevorzugt ist die Gruppe T ein Rest, der durch Abspaltung eines Wasserstoffatoms

(des aciden Wasserstoffs) aus den Verbindungen der Gruppe umfassend Thioglykolessigsäure, Mercaptopropionsäure, Mercaptoethanol, Mercaptopropanol, Mercaptobutanol, Mercaptohexanol, Octylthioglykolat, Methylmercaptan, Ethylmercaptan, Butylmercaptan, Dodecylmercaptan, Isooctylmercaptan und tert-Dodecylmercaptan, erhalten wird, wobei diese Verbindungen unsubstituiert oder substituiert sein können, vorzugsweise aber unsubstituiert sind.

In dem erfindungsgemäßen Blockcopolymer weist der Polymerblock A vorzugsweise ein zahlenmittleres Molekulargewicht von 500 g/mol bis 100000 g/mol auf. Der Polymerblock B weist vorzugsweise ein zahlenmittleres Molekulargewicht von 1000 g/mol bis 200000 g/mol, bevorzugt ein zahlenmittleres Molekulargewicht von 5000 g/mol bis 100000 g/mol und besonders bevorzugt von 5000 g/mol bis 75000 g/mol auf. Besonders bevorzugt sind solche Blockcopolymere, bei denen sowohl der Polymerblock A als auch der Polymerblock B ein Molekulargewicht im bevorzugten Bereich aufweist.

Das erfindungsgemäße Blockcopolymer weist vorzugsweise ein zahlenmittleres Molekulargewicht von 1500 g/mol bis 500000 g/mol, bevorzugt von 5000 g/mol bis 100000 g/mol und ganz besonders bevorzugt von 10000 g/mol bis 75000 g/mol auf.

Das erfindungsgemäße Blockcopolymer weist vorzugsweise weniger als 5 Massen-ppm, bevorzugt weniger als 2 Massen-ppm an organisch gebundenem, insbesondere an endständigem Halogen, insbesondere Brom auf. Besonders bevorzugt weist das Blockcopolymer kein organisch gebundenes Halogen oder zumindest nur nicht nachweisbare Mengen an organisch gebundenem Halogen auf.

Die erfindungsgemäßen Blockcopolymere können auf verschiedene Weise hergestellt werden. Vorzugsweise sind die erfindungsgemäßen Blockcopolymere nach dem nachfolgend beschriebenen Verfahren erhältlich.

Das erfindungsgemäße Verfahren zur Herstellung der erfindungsgemäßen Blockcopolymeren zeichnet sich dadurch aus, dass es die Schritte

A) Umsetzung eines Atomübertragungsradikalstarters, der Formel EX, der mindestens ein organisch gebundenes Halogenatom X aufweist, mit Monomeren der Formel A1 in Gegenwart eines mindestens ein Übergangsmetall aufweisenden Katalysators in einem Polymerisationsschritt,
B) Umsetzen der in Schritt A) erhaltenen Verbindungen mit den Verbindungen B1 und B2 und
C) Zugabe einer Verbindung TH, zum Polymerisationsgemisch des Schrittes B),

umfasst, wobei A, B, B1, B2 und T die oben beschriebene Bedeutung haben.

Als Verbindung TH wird vorzugsweise Thioglykolessigsäure, Mercaptopropionsäure, Mercaptoethanol, Mercaptopropanol, Mercaptobutanol, Mercaptohexanol, Octylthioglykolat, Methylmercaptan, Ethylmercaptan, Butylmercaptan, Dodecylmercaptan, Isooctylmercaptan oder tert-Dodecylmercaptan eingesetzt.

Als Initiator EX kann jede Verbindung eingesetzt werden, die ein Atome bzw. eine Atomgruppe aufweist, welche unter den Polymerisationsbedingungen des ATRP-Verfahrens radikalisch übertragbar ist. Vorzugsweise wird p-Toluolsulfonylchlorid, 2-Chlor- oder 2-Brompropionsäure, 2-Chlor- oder 2-Bromisobuttersäure, 1-Phenethylchlorid oder -bromid, 2-Brom- oder 2-Chlorpropionsäuremethylester oder -ethylester, 2-Chlor- oder 2-Bromisobuttersäureethylester- oder -methylester, Chlor- oder Bromacetonitril, 2-Chlor- oder 2-Bromopropionitril, α-Brom-Benzacetonitril oder α-Brom-γ-Butyrolacton eingesetzt.

Als Monomere A1, B1 und B2 können die oben genannten Monomere eingesetzt werden. Als Monomere der Formel A1 wird vorzugsweise Benzylacrylat oder -methacrylat, bevorzugt Benzylmethacrylat eingesetzt.

Als Monomere der Formel B1 werden vorzugsweise Methylpolyethylenglycolmethacrylate, vorzugsweise mit 10 bis 15, bevorzugt mit 11 bis 13 Ethylenoxid-Einheiten, eingesetzt. Als Monomere der Formel B2 wird vorzugsweise Dimethylaminoalkylmethacrylat, mit Alkyl = methyl, ethyl, propyl oder butyl, vorzugsweise methyl, eingesetzt.

Die Verfahrensschritte A) und B) können als ATRP durchgeführt werden.

Als Übergangsmetall aufweisende Katalysatoren für die Verfahrensschritte A) und B) sind z. B. solche Übergangsmetallverbindungen geeignet, wie sie z. B. in Chem. Rev. 2001, 101, S.2921ff, auf welche ausdrücklich verwiesen wird, näher beschrieben werden. Allgemein können alle Übergangsmetallverbindungen verwendet werden, die mit dem Initiator, bzw. der Polymerkette, die eine übertragbare Atomgruppe z.B. ein Halogen aufweist, einen Redox-Zyklus bilden können. Vorzugsweise eingesetzte Katalysatoren sind ausgewählt aus den Kupfer-, Eisen-, Kobalt-, Chrom-, Mangan-, Molybdän-, Silber-, Zink-, Palladium-, Rhodium-, Platin-, Ruthenium-, Iridium-, Ytterbium-, Samarium-, Rhenium- und/oder Nickelverbindungen, insbesondere solchen, in denen das Übergangsmetall in der Oxidationsstufe I vorliegt. Bevorzugt werden Kupferverbindungen eingesetzt. Vorzugsweise werden als Kupferverbindungen solche, ausgewählt aus $Cu_2O$, CuBr, CuCl, CuI, $CuN_3$, CuSCN, CuCN, $CuNO_2$, $CuNO_3$, $CuBF_4$, $Cu(CH_3COO)$ oder $Cu(CF_3COO)$ und Gemischen davon eingesetzt.

Alternativ zur Durchführung der Verfahrensschritte A) und B) als ATRP können diese auch als sogenannte reverse ATRP durchgeführt werden. Bei dieser Variante des Verfahrens können Übergangsmetallverbindungen in höheren Oxidationsstufen wie z.B. $CuBr_2$, $CuCl_2$, CuO, $CrCl_3$, $Fe_2O_3$ oder $FeBr_3$ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u. a. von Wäng und Matyjaszewski in Macromolecules, 1995, 28, S.7572 ff beschrieben, auf die ausdrücklich verwiesen wird.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415, auf welche ausdrücklich verwiesen wird, näher beschrieben.

Weitere Varianten der ATRP stellen z. B. die AGET-Methode (Activator generated by electron transfer), die ICAR-Methode (Initiator for continuous activator regeneration)und die ARGET-Methode (Activators regenerated by electron transfer) dar. Eine zusammenfassende Beschreibung dieser Varianten findet sich in T. Pintauer & K. Matyjaszewski, Chem. Soc. Rev., 2008, 37, Seite 1087 - 1097.

Um die Löslichkeit der Metallverbindungen in der Reaktionslösung zu erhöhen und gleichzeitig die Bildung stabiler und dadurch polymerisationsinaktiver Organometallverbindungen zu vermeiden, kann es vorteilhaft sein, dem Reaktionsgemisch Liganden zugegeben. Zusätzlich kann durch die Zugabe von Liganden die Abstraktion der übertragbaren Atomgruppe durch die Übergangsmetallverbindung erleichtert werden. Eine Auflistung geeigneter Liganden findet sich beispielsweise in WO 97/18247, WO 97/47661 oder WO 98/40415. Vorzugsweise weisen die als Ligand verwendeten Verbindungen zumeist ein oder mehrere Stickstoff-, Sauerstoff-, Phosphor- und/oder Schwefelatome als koordinativen Bestandteil auf. Besonders bevorzugt sind dabei stickstoffhaltige Verbindungen. Ganz besonders bevorzugt sind stickstoffhaltige Chelatliganden. Beispiele für besonders geeignete Liganden sind z. B. 2,2'-Bipyridin, N,N,N',N'',N''-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin. Für den Fachmann ist es offensichtlich, dass eine Vielzahl weitere Liganden ebenfalls verwendet werden kann.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Vorzugsweise wird in Verfahrensschritt A) soviel an Ligand eingesetzt, dass das molare Verhältnis von Ligand zu Übergangsmetall von 100:1 bis 0,1:1, vorzugsweise 6:1 bis 0,1:1 und besonders bevorzugt 3:1 bis 1:1 beträgt.

Die Polymerisation in den Schritten A) und B) kann in Substanz erfolgen oder in Lösung erfolgen. Die Polymerisation in Schritt A) und B), kann als Emulsionspolymerisation, Miniemulsions- oder Mikroemulsionspolymerisation oder Suspensionspolymerisation durchgeführt werden.

Werden die Schritte A) und B) in Gegenwart eines Lösungsmittels durchgeführt, so werden vorzugsweise halogenfreie Lösungsmittel, bevorzugt Toluol, Xylol, Acetate, vorzugsweise Butylacetat, Ethylacetat, Propylacetat; Ketone, vorzugsweise Ethylmethylketon, Aceton; Ether; Aliphaten, vorzugsweise Pentan, Hexan; oder Alkohole, vorzugsweise Cyclohexanol, Butanol, Hexanol, eingesetzt. Auch Wasser oder Gemische aus Wasser und wassermischbaren Lösemitteln können als Lösungsmittel geeignet sein.

Die Polymerisation in den Schritten A) und B) kann bei Normaldruck, Unter- oder Überdruck, bevorzugt bei Normaldruck, durchgeführt werden. Die Polymerisation wird vorzugsweise in einem Temperaturbereich von -20°C bis 200°C, bevorzugt von 0°C bis 130°C, besonders bevorzugt von 30°C bis 120°C durchgeführt.

Der Abbruch der Polymerisation in den Schritten A) und B) kann z. B. wie für den Fachmann bekannt durch Oxidation des Übergangsmetalls erfolgen. Dies kann z. B. dadurch geschehen, dass in das Polymerisationsgemisch Sauerstoff, z. B. durch Durchleiten von Luft, geleitet wird.

In Schritt C) kann die Zugabe der Schwefelverbindung TH (Q-SH), zum Polymerisationsgemisch des Schrittes B) z. B. nach oder während des Abbruchs der Polymerisationsreaktion erfolgen. Die Zugabe der Verbindung TH kann direkt erfolgen oder es kann eine geeignete Verbindung zugegeben werden, aus der eine Verbindung TH erhalten bzw. freigesetzt wird.

Die Zugabe der Schwefelverbindung TH kann direkt in das in Polymerisationsschritt B) erhaltene Polymerisationsgemisch oder aber in ein aufgearbeitetes Polymerisationsgemisch erfolgen. Vorzugsweise erfolgt die Zugabe direkt in das in Verfahrensschritt B) erhaltene Polymerisationsgemisch ohne eine vorherige Aufarbeitung.

Die Schwefelverbindung TH wird, bezogen auf die Kettenenden (organisch gebundenes Halogen), nur in einem minimalen Überschuss von 1,6 Äquivalenten, bevorzugt 1,2 Äquivalenten und besonders bevorzugt von 1 bis 1,1 Äquivalenten eingesetzt. Durch die Zugabe der mercaptofunktionalisierten Schwefelverbindung findet eine Entfernung der endständigen Halogenatome vermutlich durch Substitution derselben statt. Darüber hinaus wird im gleichen Schritt die Übergangsmetallverbindung so gefällt, dass sie sich in einer einfachen Filtration von der Polymerlösung abtrennen lässt. Dieser minimale Überschuss führt zu einem an sich nur sehr geringen Restschwefelgehalt in der Polymerlösung, der durch Modifikation des folgenden Filtrationsschrittes leicht entfernt werden kann, indem z. B. Adsorbentien wie Aktivkohle dem Gemisch zugegeben werden oder als Filtermaterial ein Aktivkohlefilter benutzt wird.

Durch die mindestens äquivalente Zugabe von Schwefelverbindungen TH können die erfindungsgemäßen Blockcopolymere erhalten werden, die halogenfrei oder nahezu halogenfrei sind. Mit diesem Schritt kann außerdem erreicht werden, dass Blockcopolymere mit endständigen Thioethergruppen mit einem Kupfergehalt < 5 Massen-ppm, besonders bevorzugt < 2 Massen-ppm erhalten werden können.

Die Schwefelverbindungen TH können eine oder mehrere SH-Gruppen aufweisen. Bevorzugt werden in dem erfindungsgemäßen Verfahren als Schwefelverbindungen Q-SH Thioglykolessigsäure, Mercaptopropionsäure, Mercaptoethanol, Mercaptopropanol, Mercaptobutanol, Mercaptohexanol, Octylthioglykolat, Methylmercaptan, Ethylmercaptan, Butylmercaptan, Dodecylmercaptan, Isooctylmercaptan oder tert-Dodecylmercaptan eingesetzt.

Es ist dem Fachmann leicht ersichtlich, dass die beschriebenen Schwefelverbindungen bei einer Zugabe zur Polymerlösung nach Abbruch der Polymerisation mit Ausnahme der beschriebenen Substitutionsreaktion der endständigen Halogenatome keinen weiteren Einfluss auf die Polymere haben können. Dies gilt insbesondere für die Molekulargewichtsverteilungen, das zahlenmittlere Molekulargewicht der Einheiten A und B, zusätzliche Funktionalitäten, Glastemperaturen, bzw. Schmelztemperaturen bei teilkristallinen Polymeren und Polymerarchitekturen wie Verzweigungen oder Blockstrukturen.

Die erfindungsgemäßen Blockcopolymere können insbesondere als Dispergiermittel verwendet werden.

Besonders bevorzugte Zusammensetzungen sind deshalb solche, Zusammensetzungen, die als Dispergiermittel, vorzugsweise als alleiniges Dispergiermittel, erfindungsgemäße Blockcopolymere aufweisen. Die Zusammensetzung kann neben dem Dispergiermittel Wasser und gegebenenfalls weitere Bestandteile enthalten oder aus Wasser und Dispergiermittel, insbesondere ausschließlich erfindungsgemäßen Blockcopolymeren, bestehen, insbesondere wenn es sich um eine Dispergiermittelzusammensetzung handelt. Als weitere gegebenenfalls vorhandene Bestandteile kann die erfindungsgemäße Zusammensetzung Feststoffe z. B. ein Pigment oder mehrere Pigmente enthalten.

Ein Feststoff im Sinne der vorliegenden Erfindung kann prinzipiell jedes feste organische oder anorganische Material sein.

Beispiele solcher Feststoffe sind Pigmente, Füllstoffe, Farbstoffe, optische Aufheller, keramische Materialien, magnetische Materialien, nanodisperse Feststoffe, Metalle, Biozide, Agrochemikalien und Pharmaka, welche als Dispersionen angewendet werden.

Bevorzugte Feststoffe sind Pigmente, wie sie zum Beispiel im "Colour Index, Third Edition, Volume 3; The Society of Dyers and Colorists (1982)" und den nachfolgenden, überarbeiteten Auflagen genannt werden.

Beispiele für Pigmente sind anorganische Pigmente, wie Ruße, Titandioxide, Zinkoxide, Preußischblau, Eisenoxide, Cadmiumsulfide, Chrompigmente, wie zum Beispiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt.

Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phtalocyaninpigmente. Weitere Beispiele für organische Pigmente werden in dem Buch "W. Herbst, K. Hunger, Industrial Organic Pigments, VCH, Weinheim (1993)" genannt.

Weitere bevorzugte Feststoffe sind Füllstoffe, wie zum Beispiel Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen; und Biozide, Agrochemikalien und Pharmaka, wie zum Beispiel Fungizide.

Die erfindungsgemäße Zusammensetzung kann zur Herstellung von Farben und Lacken verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Beispiel 1:

In einem mit Rührer, Thermometer, Rückflusskühler, Stickstoffeinleitungsrohr und Tropftrichter ausgestatteten Dreihalskolben wurden unter $N_2$-Atmosphäre 46,57 g Benzylmethacrylat, 150 g Butylacetat, 1,25 g Kupfer(I)oxid u n d 3 , 2 g PMDETA (N,N,N',N'',N'-Pentamethyldiethylentriamin) vorgelegt. Die Lösung wurde auf 90°C erwärmt. Anschließend wurde bei gleicher Temperatur 3,2 g Bromisobuttersäureethylester zugegeben. Nach 2 h Reaktionszeit wurde ein Gemisch aus 20,77 g Dimethylaminoethylmethacylat (DMAEMA) und 75,06 g Methoxy polyethylenglycol 500 methacrylat (MPEG 500 MA der Firma Evonik Röhm GmbH, CAS-Nr.: [26915-72-0]) zugegeben und für weitere 3h bei 90°C gerührt. Anschließend wurde noch nochmals eine Stunde bei 100°C gerührt. Zur Abbruch der Reaktion wurde für ca. 15 min Luftsauerstoff eingeleitet und es wurden 3,22g n-Dodecylmercaptan zugegeben. Nach einer Stunde Rühren wurde der Niederschlag mittels einer Überdruckfiltration durch einen Filter der Firma Beko (Typ: KD-10) abfiltriert. Im Rotationsverdampfer wurde bei einer Temperatur von 100 °C und 2 mbar das Lösemittel aus dem hellgelben Filtrat abgezogen.

Der hellgelbe, viskose Rückstand ist das gewünschte Produkt.

Beispiel 2:

In einem mit Rührer, Thermometer, Rückflusskühler, Stickstoffeinleitungsrohr und Tropftrichter ausgestatteten Dreihalskolben wurden unter $N_2$-Atmosphäre 20,02 g Benzylmethacrylat, 150 g Butylacetat, 1,1 g Kupfer(I)oxid und 2,7 g PMDETA (N,N,N',N'',N''-Pentamethyldiethylentriamin) vorgelegt. Die Lösung wurde auf 90°C erwärmt. Anschließend wurde bei gleicher Temperatur 2,7 g Bromisobuttersäureethylester zugegeben. Nach 2 h Reaktionszeit wurde ein Gemisch aus 26,75 g Dimethylaminoethylmethacylat (DMAEMA) und 96,66 g Methoxy polyethylenglycol 500 methacrylat (MPEG 500 MA der Firma Evonik Röhm GmbH, CAS-Nr.: [26915-72-0]) zugegeben und für weitere 3h bei 90°C gerührt. Anschließend wurde noch nochmals eine Stunde bei 100°C gerührt. Zur Abbruch der Reaktion wurde für ca. 15 min Luftsauerstoff eingeleitet und es wurden 2,8 g n-Dodecylmercaptan zugegeben. Nach einer Stunde Rühren wurde der Niederschlag mittels einer Überdruckfiltration durch einen Filter der Firma Beko (Typ: KD-10) abfiltriert. Im Rotationsverdampfer wurde bei einer Temperatur von 100 °C und 2 mbar das Lösemittel aus dem hellgelben Filtrat abgezogen. Der hellgelbe, viskose Rückstand ist das gewünschte Produkt.

Beispiel 3:

In einem mit Rührer, Thermometer, Rückflusskühler, Stickstoffeinleitungsrohr und Tropftrichter ausgestatteten Dreihalskolben wurden unter $N_2$-Atmosphäre 20,47 g Benzylmethacrylat, 150 g Butylacetat, 0,55 g Kupfer(I)oxid und 1,40 g PMDETA (N,N,N',N'',N''-Pentamethyldiethylentriamin) vorgelegt. Die Lösung wurde auf 90°C erwärmt. Anschließend wurde bei gleicher Temperatur 1,40 g Bromisobuttersäureethylester zugegeben. Nach 2 h Reaktionszeit wurde ein Gemisch aus 20,47 g Dimethylaminoethylmethacylat (DMAEMA) und 98,83 g Methoxy polyethylenglycol 500 methacrylat (MPEG 500 MA der Firma Evonik Röhm GmbH, CAS-Nr.: [26915-72-0]) zugegeben und für weitere 3h bei 90°C gerührt. Anschließend wurde noch nochmals eine Stunde bei 100°C gerührt. Zur Abbruch der Reaktion wurde für ca. 15 min Luftsauerstoff eingeleitet und es wurden 1,42 g n-Dodecylmercaptan zugegeben. Nach einer Stunde Rühren wurde der Niederschlag mittels einer Überdruckfiltration durch einen Filter der Firma Beko (Typ: KD-10) abfiltriert. Im Rotationsverdampfer wurde bei einer Temperatur von 100 °C und 2 mbar das Lösemittel aus dem hellgelben Filtrat abgezogen. Der hellgelbe, viskose Rückstand ist das gewünschte Produkt.

Beispiel 4:

In einem mit Rührer, Thermometer, Rückflusskühler, Stickstoffeinleitungsrohr und Tropftrichter ausgestatteten Dreihalskolben wurden unter $N_2$-Atmosphäre 9,50 g Benzylmethacrylat, 150 g Butylacetat, 0,74 g Kupfer(I)oxid und 1,87 g PMDETA (N,N,N',N'',N''-Pentamethyldiethylentriamin) vorgelegt. Die Lösung wurde auf 90°C erwärmt. Anschließend wurde bei gleicher Temperatur 1,87 g Bromisobuttersäureethylester zugegeben. Nach 2 h Reaktionszeit wurde ein Gemisch aus 29,49 g Dimethylaminoethylmethacylat (DMAEMA) und 106,54 g Methoxy polyethylenglycol 500 methacrylat (MPEG 500 MA der Firma Evonik Röhm GmbH, CAS-Nr.: [26915-72-0]) zugegeben und für weitere 3h bei 90°C gerührt. Anschließend wurde noch nochmals eine Stunde bei 100°C gerührt. Zur Abbruch der Reaktion wurde für ca. 15 min Luftsauerstoff eingeleitet und es wurden 1,90 g n-Dodecylmercaptan zugegeben. Nach einer Stunde Rühren wurde der Niederschlag mittels einer Überdruckfiltration durch einen Filter der Firma Beko (Typ: KD-10) abfiltriert. Im Rotationsverdampfer wurde bei einer Temperatur von 100 °C und 2 mbar das Lösemittel aus dem hellgelben Filtrat abgezogen. Der hellgelbe, viskose Rückstand ist das gewünschte Produkt.

Anwendungstechnische Prüfung:

Prüfpigmente:

Aus der Vielzahl der möglichen Feststoffe wurden folgende handelsübliche Pigmente ausgewählt: Printex® 95 (Hersteller: Evonik Industries AG) als Rußpigment, Heliogenblau L7101F (Hersteller: BASF AG) Bayferrox® 120M und Bayferrox® 3920 (Hersteller: Firma Bayer AG) als typische Buntpigmente.

Weißtint:

Zur Herstellung der Farblacke wird ein Weißtint folgender Zusammensetzung verwendet:

a) Herstellung einer Weißpaste (Tabelle 1):

| | Einwaage[g] |
|---|---|
| TD755W [a)] | 17,4 |
| demineralisiertes Wasser | 39,6 |
| Foamex® 810 [b)] | 2,0 |
| Parmetol® K 40 [c)] | 0,2 |
| Aerosil® 200 [d)] | 0,6 |
| Kronos® 2310 [e)] | 140,0 |
| Gesamt | 200,0 |

[a)] Dispergieradditiv, Handelsname der Evonik Industries AG
[b)] Entschäumer, Handelsname der Evonik Industries AG
[c)] Biocid, Handelsname der Firma Schülke & Mayr
[d)] $SiO_2$, Handelsname der Firma Evonik Industries AG
[e)] Titandioxid, Handelsname der Firma KRONOS International, Inc.

Die Rezepturbestandteile werden gemäß der vorstehenden Rezeptur aus Tabelle 1 mit 200 g Glasperlen versetzt und anschließend in einem Skandex Mischer (Typ: DAS H 200-K der Firma Lau GmbH) für 2 h gerüttelt. Anschließend werden die Glasperlen mit Hilfe eines Siebes von der Weißpaste getrennt.

b) Herstellung des Weißlacks (Tabelle 2):

| | Einwaage [g] |
|---|---|
| Weißpaste (nach Tabelle 1) | 45,0 |
| Neocryl XK 90/ Texanol® 97: 3 [f)] | 53,5 |
| Tego® Wet KL 245 [g)] | 0,5 |
| Visko Plus® 3000 [h)] | 1,0 |
| *Gesamt* | *100,0* |

[f)] Bindemittel, Handelsname der Firma NeoResins
[g)] Netzmittel, Handelsname der Evonik Industries AG
[h)] Verdicker, Handelsname der Evonik Industries AG

Die Formulierung wird 15 min mit einem Dissolver bei mittlerer Scherrate gerührt und anschließend über ein 125 μm Sieb abgesiebt.

<u>Herstellung der Farbpasten:</u>

(Tabelle 3):

| | Heliogenblau® L7101F | Printex® 95 | Bayferrox® 120 M | Bayferrox® 3920 |
|---|---|---|---|---|
| $H_2O$, demin. | 50,0 g | 67,0 g | 23,2 g | 38,5 g |
| Dispergieradditiv a) | 14,0 g | 12,0 g | 7,8 g | 10,5 g |
| Foamex 830 b) | 1,00 g | 1,00 g | 1,00 g | 1,00 g |
| Pigment | 35,0 g | 20,0 g | 65 g | 50 g |
| Gesamtsumme | 100 g | 100 g | 100 g | 100 g |

a) Copolymere aus Beispiel 1 - 4, bzw. Menge Dispergieradditiv bezogen auf ein 100% Produkt.
b) Entschäumer, Handelsname der Firma Evonik Goldschmidt GmbH

Die Rezepturbestandteile werden gemäß den vorstehenden Rezepturen aus Tabelle 3 in 250 ml Schraubdeckelgläser eingewogen und mit Glasperlen (200 g Glasperlen auf 100 g Mahlgut) versetzt. Die verschlossenen Gläser werden anschließend in einem Skandex Mischer (Typ: DAS H 200-K der Firma Lau GmbH) für 2 h gerüttelt. Anschließend werden die Glasperlen mit Hilfe eines Siebes von der Pigmentpaste getrennt.

Zur Ausprüfung wird je 1 g Farbpaste und 20 g Weißtint gemeinsam eingewogen. Das Gemisch wird 1 min im Speedmixer (Typ: DAC 150 FVZ der Firma Hauschild & Co. KG) bei 2500 U/min homogenisiert. Die abgetönten Farblacke wurden mit einem Spiralrakel (100 $\mu$m) auf einer Kontrastkarte (Leneta®) aufgerakelt und bei Raumtemperatur getrocknet.

Farbmessung:

Die Farbmessung der Lackabmischung (100$\mu$m-Schichtdicke auf Leneta®-Kontrastkarte) erfolgte mit einem Gerät der Firma X-Rite (Typ: X-Rite SP 60). Von allen Proben wurden die sogenannten L*a*b*-Werte gemäß des CIE-Lab-Systems (CIE = Commission Internationale de l'Eclairage) bestimmt. Das CIE-Lab-System ist als ein dreidimensionales System zur quantitativen Beschreibung der Farborte nützlich. Darin sind auf einer Achse die Farben Grün (negative a-Werte) und Rot (positive a*-Werte) aufgetragen, auf der dazu im rechten Winkel angeordneten Achse die Farben Blau (negative b*-Werte) und Gelb (positive b*-Werte). Der Wert C* setzt sich aus a* und b* wie folgt zusammen: $C^* = (a^{*2}+b^{*2})^{0,5}$ und wird zur Beschreibung von violetten Farborten verwandt. Die beiden Achsen kreuzen sich im Unbuntpunkt. Die vertikale Achse (Unbuntachse) ist maßgebend für die Helligkeit von Weiß (L = 100) bis Schwarz (L = 0). Mit dem CIE-Lab-System können nicht nur Farborte, sondern auch Farbabstände durch die Angabe der drei Koordinaten beschrieben werden.
Der Normfarbwert Y wurde nach folgender Formel ermittelt (Y1):

$$Y = \left(\frac{L^* + 16}{116}\right)^3 * 100 \qquad \text{(Y1)}$$

Die Farbstärke F wurde nach folgender Formel ermittelt (Y2):

$$F = \frac{(100 - Y)^2}{2 * Y} \qquad \text{(Y2)}$$

Rub-out-Test:

Um insbesondere das vertikale Aufschwimmen von Pigmenten in Lackfilmen sichtbar und messbar zu machen, kann man den sogenannten Rub-out-test durchführen. Dazu reibt man den noch feuchten, aber bereits angezogenen Lackfilm mit dem Finger oder einem Pinsel. Haben sich die Pigmente entmischt oder liegen sie stark flockuliert vor, so

wird durch den mechanischen Vorgang des Reibens wieder eine homogene Verteilung erzwungen. Es entsteht der angestrebte Farbton des homogenen Gemisches. An der Farbdifferenz zum ungeriebenen Film erkennt man das Ausmaß der Störung. Man kann sowohl einen positiven, als auch einen negativen Rub-out-Effekt erhalten. Ein positiver Rub-out-Effekt bedeutet, dass die Farbstärke des ungeriebenen Films niedriger als die des geriebenen ist, was z. B. auf das Aufschwimmen von Weißpigment zurückzuführen sein kann. Bei einem negativen Rub-out-Effekt ist es umgekehrt.

Als Dispergiermittel gemäß dem Stand der Technik wurden folgende Dispergiermittel V 1 bis V 3 mitverwendet:

V1: Disperbyk® 2010 der Firma BYK-Chemie GmbH
V2: EFKA® 4585 der Firma CIBA AG
V3: TEGO Dispers® 750W der Firma Evonik Industries AG

Die Farbpasten wurden analog Tabelle 3 angesetzt, wobei die Menge an Dispergieradditiv und Wasser angepasst wurde, da es sich bei V1 und V3 um ca. 40 gew.-%ige und bei V2 um ca. 50 gew.-%ige wässrige Lösungen handelt.

Tabelle 4: Weißtint mit Printex® 95 Farbpaste:

| Dispergieradditiv | Helligkeit L* | a* | b* | Rub-Out ΔE | Y | F |
|---|---|---|---|---|---|---|
| Beispiel 1 | 54,03 | -1,08 | -4,59 | 1,51 | 22,00 | 138,24 |
| Beispiel 2 | 46,91 | -0,94 | -3,93 | 1,12 | 15,95 | 221,44 |
| Beispiel 3 | 45,11 | -0,85 | -3,46 | 1,19 | 14,62 | 249,30 |
| Beispiel 4 | 51,03 | -1,05 | -4,69 | 0,98 | 19,29 | 168,79 |
| V1 | 47,32 | -0,91 | -3,36 | 1,07 | 16,26 | 215,54 |
| V2 | 45,37 | -0,84 | -3,24 | 1,43 | 14,81 | 245,06 |
| V3 | 46,49 | -0,93 | -3,93 | 1,13 | 15,63 | 227,64 |

Es ist zu erkennen, daß insbesondere das Polymer aus Beispiel 3 eine verbesserte Farbstärke gegenüber den Dispergieradditiven des Standes der Technik aufweist.

Tabelle 5: Weißtint mit Heliogenblau® 7101F Farbpaste:

| Dispergieradditiv | Helligkeit L* | a* | b* | Rub-Out ΔE | Y | F |
|---|---|---|---|---|---|---|
| Beispiel 1 | 63,25 | -20, 91 | -35,66 | 0,27 | 31,89 | 72,74 |
| Beispiel 2 | 62,99 | -21,33 | -36,34 | 0,88 | 31,57 | 74,14 |
| Beispiel 3 | 61,28 | -21,15 | -37,28 | 0,80 | 29,57 | 83,88 |
| Beispiel 4 | 63,91 | -20,61 | -34,28 | 0,56 | 32,69 | 69,29 |
| V1 | 62,33 | -21,34 | -36,89 | 1,23 | 30,79 | 77,79 |
| V2 | 62,53 | -21,62 | -36,74 | 1,23 | 31,03 | 76,67 |
| V3 | 61,45 | -21,26 | -37,00 | 0,50 | 29,76 | 82,87 |

Aus der oben stehenden Tabelle wird deutlich, dass die erfindungsgemäßen Beispiele niedrigere Rub-Out-Werte aufweisen und die Herstellung von Phthalocyaninpasten mit hoher Stabilität ermöglichen. Im gezeigten Tinting resultieren, insbesondere im Beispiel 3, Farben mit hoher Farbstärke F.

Tabelle 6: Weißtint mit Bayferrox® 3920 Farbpaste:

| Dispergieradditiv | Helligkeit L* | a* | b* | Rub-Out ΔE | Y | F |
|---|---|---|---|---|---|---|
| Beispiel 1 | 84,65 | 6,90 | 26,52 | 0,21 | 65,32 | 9,20 |
| Beispiel 2 | 84,36 | 7,06 | 27,50 | 0,61 | 64,76 | 9,59 |

(fortgesetzt)

| Dispergieradditiv | Helligkeit L* | a* | b* | Rub-Out ΔE | Y | F |
|---|---|---|---|---|---|---|
| Beispiel 3 | 81,56 | 8,41 | 30,32 | 0,91 | 59,49 | 13,79 |
| Beispiel 4 | 85,01 | 6,73 | 26,09 | 1,09 | 66,03 | 8,74 |
| V1 | 82,45 | 7,89 | 30,84 | 1,76 | 61,13 | 12,36 |
| V2 | 82,85 | 7,72 | 30,23 | 1,46 | 61,88 | 11,74 |
| V3 | 85,17 | 6,41 | 27,66 | 3,00 | 66,34 | 8,54 |

Die Leistungsfähigkeit der erfindungsgemäßen Dispergiermittel für feinteilige Pigmente des Bayferrox®-Typs wird in der Tabelle 6 durch die niedrigeren Rub-Out Werte erdeutlicht.

Tabelle 7: Weißtint mit Bayferrox® 120 M Farbpaste:

| Dispergieradditiv | Helligkeit L* | a* | b* | Rub-Out ΔE | Y | F |
|---|---|---|---|---|---|---|
| Beispiel 3 | 63,94 | 21,63 | 8,57 | 0,83 | 32,73 | 69,14 |
| Beispiel 4 | 64,98 | 21,08 | 8,31 | 0,45 | 34,02 | 63,97 |
| V3 | 65,49 | 21,04 | 8,29 | 0,70 | 34,67 | 61,56 |

Die Leistungsfähigkeit der erfindungsgemäßen Dispergiermittel für Rotpigmente des Bayferrox®-Typs wird in der Tabelle 7 durch die höheren Farbwerte gegenüber einem Dispergieradditiv (V3) gemäß dem Stand der Technik deutlich.

## Patentansprüche

1. Blockcopolymer der Formel E-[AB]-T, mit E ein Initiatorfragment eines Polymerisationsinitiators, der fähig ist, eine radikalische Atomtransferpolymerisation zu initiieren, A und B unterschiedlich aufgebaute Polymerblöcke und T eine Kettenpolymerabschlussgruppe, **dadurch gekennzeichnet, dass** der Polymerblock A aufgebaut ist aus Monomeren der Formel A1:

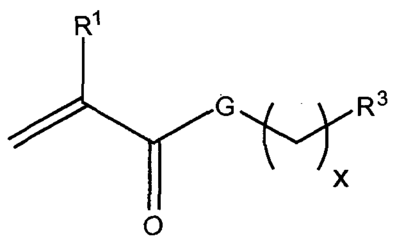

(A1)

und der Polymerblock B gebildet wird durch ein Copolymer aus Monomeren der Formel B1:

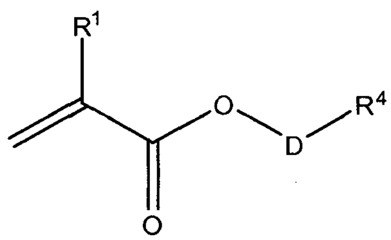

(B1)

mit D einer Gruppe der allgemeinen Formel (C1)

$$-(C_2H_4O)_i(C_3H_6O)_j(C_4H_8O)_k(C_{12}H_{24}O)_l(C_8H_8O)_m- \quad (C1)$$

wobei i, j, k, l und m voneinander unabhängige ganze Zahlen von 0 - 100 sind, mit der Maßgabe, dass die Summe aus i+j+k+l+m ≥ 1, und falls mehr als einer der Indices i, j, k, l und m > 0 ist, die allgemeine Formel (C1) ein statistisches Oligomer, ein Blockoligomer oder ein Gradientenoligomer darstellt,
und Monomeren der Formel B2:

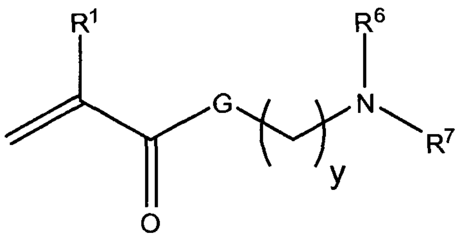

(B2)

mit $R^1$ unabhängig von einander H oder Alkyl,
G = Sauerstoff oder $NR^2$ mit $R^2$ unabhängig voneinander H oder Alkyl mit 1 bis 8 C-Atomen, bevorzugt Methyl, $R^3$ gleich Aryl- oder Arylalkylrest, $R^4$ gleich Alkyl, vorzugsweise $C_1$- bis $C_3$-Alkyl, $R^6$ und $R^7$ unabhängig voneinander Alkylreste, x = 0 bis 10 und y gleich 1 bis 10.

2. Blockcopolymer nach Anspruch 1, **dadurch gekennzeichnet, dass** die Polymerkettenabschlussgruppe ein schwefelhaltiger Rest -SQ mit Q gleich einem einwertigen organischen Rest ist.

3. Blockcopolymer nach Anspruch 1 oder 2, **dadurch gekennzeichnet, dass** Q ein Alkylrest, ein Alkoholrest oder ein Säurerest ist.

4. Blockcopolymer nach zumindest einem der Ansprüche 1 bis 3, **dadurch gekennzeichnet, dass** der Polymerblock A ein zahlenmittleres Molekulargewicht von 500 g/mol bis 100000 g/mol aufweist.

5. Blockcopolymer nach zumindest einem der Ansprüche 1 bis 4, **dadurch gekennzeichnet, dass** der Polymerblock B ein zahlenmittleres Molekulargewicht von 1000 g/mol bis 500000 g/mol aufweist.

6. Blockcopolymer nach zumindest einem der Ansprüche 1 bis 5, **dadurch gekennzeichnet, dass** das Blockcopolymer ein zahlenmittleres Molekulargewicht von 1500 g/mol bis 500000 g/mol aufweist.

7. Blockcopolymer nach zumindest einem der Ansprüche 1 bis 6, **dadurch gekennzeichnet, dass** das Blockcopolymer weniger als 5 Massen-ppm an endständigen Halogenen aufweist.

8. Blockcopolymer nach zumindest einem der Ansprüche 1 bis 7, **dadurch gekennzeichnet, dass** es durch ein Verfahren gemäß einem der Ansprüche 9 bis 11 erhältlich ist.

9. Verfahren zur Herstellung von Blockcopolymeren gemäß zumindest einem der Ansprüche 1 bis 8, **dadurch gekennzeichnet, dass** es die Schritte

A) Umsetzung eines Atomübertragungsradikalstarters, der Formel EX, der mindestens ein organisch gebundenes Halogenatom X aufweist, mit Monomeren der Formel A1 in Gegenwart eines mindestens ein Übergangsmetall aufweisenden Katalysators in einem Polymerisationsschritt,
B) Umsetzen der in Schritt A) erhaltenen Verbindungen mit einem Polymerblock B oder den Verbindungen B1 und B2 und
C) Zugabe einer Verbindung TH, zum Polymerisationsgemisch des Schrittes B),

umfasst, wobei A, B, B1, B2 und T die Bedeutung, wie in einem der vorangegangenen Ansprüche beschrieben, haben.

**10.** Verfahren gemäß Anspruch 9, **dadurch gekennzeichnet, dass** als Verbindung TH Thioglykolessigsäure, Mercaptopropionsäure, Mercaptoethanol, Mercaptopropanol, Mercaptobutanol, Mercaptohexanol, Octylthioglykolat, Methylmercaptan, Ethylmercaptan, Butylmercaptan, Dodecylmercaptan, Isooctylmercaptan oder tert-Dodecylmercaptan eingesetzt wird.

**11.** Verfahren gemäß Anspruch 9 oder 10, **dadurch gekennzeichnet, dass** als Initiator EX p-Toluolsulfonylchlorid, 2-Chlor- oder 2-Brompropionsäure, 2-Chlor- oder 2-Bromisobutersäure, 1-Phenethylchlorid oder -bromid, 2-Brom- oder 2-Chlorpropionsäuremethylester oder -ethylester, 2-Chlor- oder 2-Bromisobuttersäureethylester- oder -methylester, Chlor- oder Bromacetonitril, 2-Chlor- oder 2-Bromopropionitril, α-Brom-Benzacetonitril oder α-Brom-γ-Butyrolacton eingesetzt wird.

**12.** Verwendung eines Blockcopolymers gemäß einem der Ansprüche 1 bis 8 als Dispergiermittel.

**13.** Zusammensetzung enthaltend ein Dispergiermittel **dadurch gekennzeichnet, dass** das Dispergiermittel ein Blockcopolymer gemäß einem der Ansprüche 1 bis 8 ist.

**14.** Zusammensetzung nach Anspruch 13, **dadurch gekennzeichnet, dass** die Zusammensetzung aus dem Dispergiermittel und Wasser besteht.

**15.** Zusammensetzung nach Anspruch 13, **dadurch gekennzeichnet, dass** die Zusammensetzung mindestens ein Pigment enthält.

**16.** Verwendung einer Zusammensetzung nach einem der Ansprüche 13 bis 15 zur Herstellung von Farben und Lacken von bindemittelhaltigen oder bindemittelfreien Pigmentpasten, Beschichtungsstoffen, Druckfarben und/oder Drucklacken.

## Claims

**1.** Block copolymer of the formula E-[AB]-T, where E is an initiator fragment of a polymerization initiator which is capable of initiating an atom transfer radical polymerization, A and B are different polymer blocks, and T is a chain polymer termination group, **characterized in that** the polymer block A is built from monomers of the formula A1:

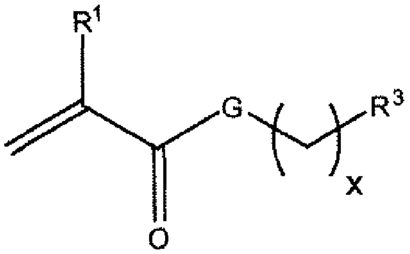

(A1)

and the polymer block B is formed by a copolymer of monomers of the formula B1:

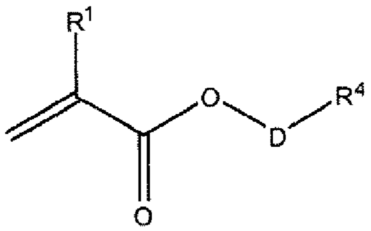

(B1)

where D is a group of the general formula (C1)

$$-(C_2H_4O)_i(C_3H_6O)_j(C_4H_8O)_k(C_{12}H_{24}O)_l(C_8H_8O)_m- \quad (C1)$$

where i, j, k, l, and m are mutually independent integers from 0-100, with the proviso that the sum of i + j + k + 1 + m ≥ 1, and, if more than one of the indices i, j, k, l, and m is > 0, the general formula (C1) represents a random oligomer, a block oligomer or a gradient oligomer,
and monomers of the formula B2:

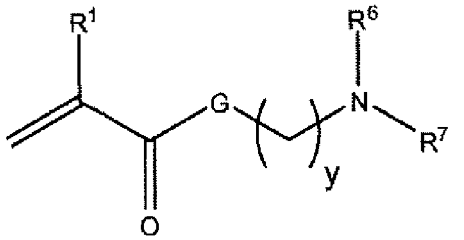

(B2)

where $R^1$ independently at each occurrence is H or alkyl,
G = oxygen or $NR^2$, where $R^2$ independently at each occurrence is H or alkyl having 1 to 8 C atoms, preferably methyl, $R^3$ is aryl or arylalkyl radical, $R^4$ is alkyl, preferably $C_1$ to $C_3$ alkyl, $R^6$ and $R^7$ independently of one another are alkyl radicals, x = 0 to 10 and y is 1 to 10.

**2.** Block copolymer according to Claim 1, **characterized in that** the polymer chain termination group is a sulfur-containing radical -SQ where Q is a monovalent organic radical.

**3.** Block copolymer according to Claim 1 or 2, **characterized in that** Q is an alkyl radical, an alcohol radical or an acid radical.

**4.** Block copolymer according to at least one of Claims 1 to 3, **characterized in that** the polymer block A has a number-average molecular weight of 500 g/mol to 100 000 g/mol.

**5.** Block copolymer according to at least one of Claims 1 to 4, **characterized in that** the polymer block B has a number-average molecular weight of 1000 g/mol to 500 000 g/mol.

**6.** Block copolymer according to at least one of Claims 1 to 5, **characterized in that** the block copolymer has a number-average molecular weight of 1500 g/mol to 500 000 g/mol.

**7.** Block copolymer according to at least one of Claims 1 to 6, **characterized in that** the block copolymer contains less than 5 ppm by mass of terminal halogens.

**8.** Block copolymer according to at least one of Claims 1 to 7, **characterized in that** it is obtainable by a process according to any of Claims 9 to 11.

**9.** Process for preparing block copolymers according to at least one of Claims 1 to 8, **characterized in that** it comprises the steps of

A) reacting an atom transfer radical initiator, of the formula EX, having at least one organically bonded halogen atom X, with monomers of the formula A1 in the presence of a catalyst comprising at least one transition metal, in a polymerization step,
B) reacting the compounds obtained in step A) with a polymer block B or with the compounds B1 and B2, and
C) adding a compound TH to the polymerization mixture from step B),

where A, B, B1, B2, and T are defined as described in any of the preceding claims.

**10.** Process according to Claim 9, **characterized in that** use is made as compound TH of thioglycolacetic acid, mercaptopropionic acid, mercaptoethanol, mercaptopropanol, mercaptobutanol, mercaptohexanol, octyl thioglycolate, methyl mercaptan, ethyl mercaptan, butyl mercaptan, dodecyl mercaptan, isooctyl mercaptan or tert-dodecyl mercaptan.

**11.** Process according to Claim 9 or 10, **characterized in that** use is made as initiator EX of p-toluenesulfonyl chloride,

2-chloro- or 2-bromo-propionic acid, 2-chloro- or 2-bromoisobutyric acid, 1-phenethyl chloride or bromide, methyl or ethyl 2-bromo- or 2-chloropropionate, ethyl or methyl 2-chloro- or 2-bromoisobutyrate, chloro- or bromoacetonitrile, 2-chloro- or 2-bromopropionitrile, α-bromo-benzacetonitrile or α-bromo-γ-butyrolactone.

**12.** Use of a block copolymer according to any of Claims 1 to 8 as a dispersant.

**13.** Composition comprising a dispersant, **characterized in that** the dispersant is a block copolymer according to any of Claims 1 to 8.

**14.** Composition according to Claim 13, **characterized in that** the composition is composed of the dispersant and water.

**15.** Composition according to Claim 13, **characterized in that** the composition comprises at least one pigment.

**16.** Use of a composition according to any of Claims 13 to 15 for producing paints and varnishes, binder-containing or binder-free pigment pastes, coating materials, printing inks and/or print varnishes.

## Revendications

**1.** Copolymère séquencé de formule E-[AB]-T, où E est un fragment amorceur d'un amorceur de polymérisation qui est apte à amorcer une polymérisation radicalaire par transfert d'atomes, A et B représentent des séquences de polymères de structures différentes et T est un groupe de terminaison de chaîne de polymère, **caractérisé en ce que** la séquence de polymère A est constituée de monomères de formule A1 :

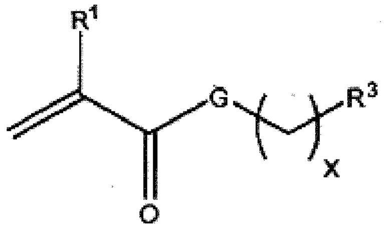

(A1)

et la séquence de polymère B est constituée d'un copolymère de monomères de formule B1 :

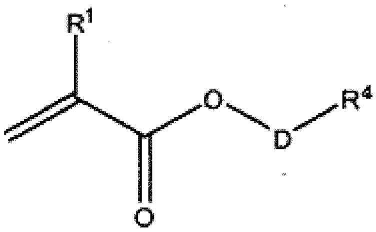

(B1)

où D représente un groupe de formule générale (C1)

$$- (C_2H_4O)_i(C_3H_6O)_j(C_4H_8O)_k(C_{12}H_{24}O)_l(C_8H_8O)_m- \qquad (C1)$$

où i, j, k, l et m représentent indépendamment les uns des autres des nombres entiers valant de 0 à 100, étant entendu que la somme de i+j+k+l+m est ≥ 1, et si plus d'un des indices i, j, k, l et m est > 0, la formule générale (C1) représente un oligomère statistique, un oligomère séquencé ou un oligomère en gradient,
et de monomères de formule B2 :

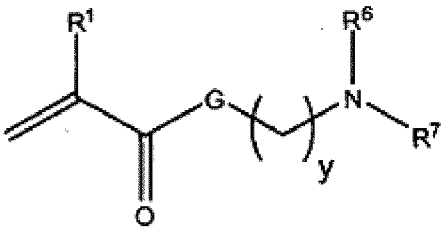

(B2)

où $R^1$ représente chaque fois indépendamment H ou un groupe alkyle,
G représente un atome d'oxygène ou $NR^2$ où $R^2$ représente chaque fois indépendamment H ou un groupe alkyle ayant de 1 à 8 atomes de carbone, de préférence méthyle, $R^3$ représente un radical aryle ou arylalkyle, $R^4$ représente un groupe alkyle, de préférence alkyle en $c_1$-$c_3$, $R^6$ et $R^7$ représentent indépendamment l'un de l'autre des radicaux alkyle, x = 0 à 10 et y vaut de 1 à 10.

2. Copolymère séquencé selon la revendication 1, **caractérisé en ce que** le groupe de terminaison de chaîne de polymère est un radical contenant du soufre -SQ où Q représente un radical organique monovalent.

3. Copolymère séquencé selon la revendication 1 ou 2, **caractérisé en ce que** Q est un radical alkyle, un radical alcool ou un radical acide.

4. Copolymère séquencé selon au moins l'une quelconque des revendications 1 à 3, **caractérisé en ce que** la séquence de polymère A présente une masse moléculaire moyenne en nombre de 500 g/mole à 100 000 g/mole.

5. Copolymère séquencé selon au moins l'une quelconque des revendications 1 à 4, **caractérisé en ce que** la séquence de polymère B présente une masse moléculaire moyenne en nombre de 1 000 g/mole à 500 000 g/mole.

6. Copolymère séquencé selon au moins l'une quelconque des revendications 1 à 5, **caractérisé en ce que** le copolymère séquencé présente une masse moléculaire moyenne en nombre de 1 500 g/mole à 500 000 g/mole.

7. Copolymère séquencé selon au moins l'une quelconque des revendications 1 à 6, **caractérisé en ce que** le copolymère séquencé comporte moins de 5 ppm en masse d'halogènes en bout de chaîne.

8. Copolymère séquencé selon au moins l'une quelconque des revendications 1 à 7, **caractérisé en ce qu'**il peut être obtenu par un procédé selon l'une quelconque des revendications 9 à 11.

9. Procédé pour la préparation de copolymères séquencés selon au moins l'une quelconque des revendications 1 à 8, **caractérisé en ce qu'**il comprend les étapes

A) mise en réaction d'un amorceur de radicaux par transfert d'atomes, de formule EX, qui comporte au moins un atome d'halogène X en liaison organique, avec des monomères de formule A1 en présence d'un catalyseur comportant au moins un métal de transition, dans une étape de polymérisation,
B) mise en réaction des composés obtenus dans l'étape A) avec une séquence de polymère B ou les composés B1 et B2 et
C) addition d'un composé TH au mélange de polymérisation de l'étape B),

A, B, B1, B2 et T ayant la signification telle qu'indiquée dans l'une quelconque des revendications précédentes.

10. Procédé selon la revendication 9, **caractérisé en ce qu'**on utilise comme composé TH l'acide thioglycolacétique, l'acide mercaptopropionique, le mercaptoéthanol, le mercaptopropanol, le mercaptobutanol, le mercaptohexanol, le thioglycolate d'octyle, le méthylmercaptan, l'éthylmercaptan, le butylmercaptan, le dodécylmercaptan, l'iso-octylmercaptan ou le tert-dodécylmercaptan.

11. Procédé selon la revendication 9 ou 10, **caractérisé en ce qu'**on utilise comme amorceur EX le chlorure de p-toluènesulfonyle, l'acide 2-chloro- ou 2-bromopropionique, l'acide 2-chloro- ou 2-bromo-isobutyrique, le chlorure ou bromure de 1-phénéthyle, le 2-bromo- ou 2-chloropropionate de méthyle ou d'éthyle, le 2-chloro- ou 2-bromo-isobutyrate d'éthyle ou de méthyle, le chloro- ou bromo-acétonitrile, le 2-chloro- ou 2-bromopropionitrile, l'$\alpha$-bromobenzacétonitrile ou l'$\alpha$-bromo-$\gamma$-butyrolactone.

**12.** Utilisation d'un copolymère séquencé selon l'une quelconque des revendications 1 à 8, en tant que dispersant.

**13.** Composition contenant un dispersant, **caractérisée en ce que** le dispersant est un copolymère séquencé selon l'une quelconque des revendications 1 à 8.

**14.** Composition selon la revendication 13, **caractérisée en ce que** la composition consiste en le dispersant et eau.

**15.** Composition selon la revendication 13, **caractérisée en ce que** la composition contient au moins un pigment.

**16.** Utilisation d'une composition selon l'une quelconque des revendications 13 à 15 pour la fabrication de peintures et vernis, de pâtes de pigments, matières de revêtement, encres d'impression et/ou laques d'impression, contenant des liants ou sans liant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0144389 A
- US 7199177 B
- WO 0040630 A
- WO 9718247 A
- DE 102006015846
- US 2005090632 A
- WO 0034345 A
- WO 2005098415 A
- WO 2008017523 A
- DE 10235696
- WO 9840415 A
- WO 9747661 A


### In der Beschreibung aufgeführte Nicht-Patentliteratur


- *J. Am. Chem. Soc.,* 1995, vol. 117, 5614
- **HANS GEORG ELIAS.** Makromoleküle. 1999, 344
- **HEUTS et al.** *Macromol. Chem. Phys.,* 1999, vol. 200, 1380-1385
- **A. SNIJDER et al.** Journal of Polymer Science, Part A, Polymer Chemistry. Wiley & Sons, vol. 40, 2350-2359
- *Chem. Rev.,* 2001, vol. 101, 2921ff
- **WÄNG ; MATYJASZEWSKI.** *Macromolecules,* 1995, vol. 28, 7572 ff
- **T. PINTAUER ; K. MATYJASZEWSKI.** *Chem. Soc. Rev.,* 2008, vol. 37, 1087-1097
- The Society of Dyers and Colorists. Colour Index. 1982, vol. 3
- **H. ENDRISS.** Aktuelle anorganische Bunt-Pigmente. Vincentz Verlag, 1997
- **W. HERBST ; K. HUNGER.** Industrial Organic Pigments. VCH, 1993